# EUROPÄISCHE PATENTSCHRIFT

(11) **EP 2 286 898 B1**
(45) Veröffentlichungstag und Bekanntmachung des Hinweises auf die Patenterteilung: **23.09.2015**
(21) Anmeldenummer: 10005449.3
(22) Anmeldetag: 26.05.2010
(51) Int. Cl.: B01D 61/36, C01D 3/06, C08G 64/24

(54) **Verfahren zur Herstellung von Polycarbonat**
Method for making polycarbonate
Procédé de fabrication de polycarbonate

(30) Priorität: 04.06.2009 DE 102009023940
(43) Veröffentlichungstag der Anmeldung: 23.02.2011
(73) Patentinhaber: Bayer Intellectual Property GmbH, 40789 Monheim (DE)
(72) Erfinder: Ooms, Pieter, Dr., 47800 Krefeld (DE); Bulan, Andreas, 40764 Langenfeld (DE); Weber, Rainer, Dr., 51519 Odenthal (DE); Rechner, Johann, Dr., 47906 Kempen (DE); Traving, Michael, Dr., 51399 Burscheid (DE)
(74) Vertreter: BIP Patents

(56) Entgegenhaltungen:
- WO-A1-01/38419
- US-A1- 2007 055 042
- LUKACH, SHAFARENKO ET AL: "REMOVAL OF ORGANIC IMPURITIES FROM SEWAGE BY EVAPORATION THROUGH POLYMER MEMBRANES", JOURNAL OF ENGINEERING PHYSICS AND THERMODYNAMICS, Bd. 69, Nr. 6, 5. Juni 1996 (1996-06-05), Seiten 757-759, XP002610312,

## Beschreibung

Die Erfindung betrifft ein Verfahren zur Herstellung von Polycarbonat, wobei eine Aufkonzentrierung von Natriumchlorid-haltigem Prozessabwasser aus dem Polycarbonat Phasengrenzflächen-Verfahren durch osmotische Destillation erfolgt.

Die Herstellung von Polycarbonaten erfolgt üblicherweise durch ein kontinuierliches Verfahren, durch Herstellung von Phosgen und anschließende Reaktion von Bisphenolen und Phosgen in Gegenwart von Alkali und einem Stickstoffkatalysator, Kettenabbrechern, und gegebenenfalls Verzweigern in einem Gemisch aus wässrig-alkalischer Phase und organischer Lösungsmittelphase in der Grenzfläche.

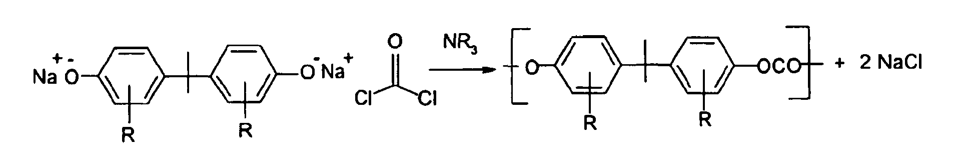

Die Herstellung von Polycarbonaten z.B. durch den Phasengrenzflächenprozess ist prinzipiell in der Literatur beschrieben, siehe z.B. in Chemistry and Physics of Polycarbonates, Polymer Reviews, H. Schnell, Vol. 9, John Wiley and Sons, Inc. (1964), S. 50/51.

Bei der Herstellung von Polycarbonaten hat sich das Zweiphasengrenzflächenverfahren seit vielen Jahren bewährt. Das Verfahren ermöglicht die Herstellung von thermoplastischen Polycarbonaten in einer Reihe von Einsatzgebieten wie z.B. für Datenträger (CD, DVD), für optische Anwendungen oder für medizinische Anwendungen.

Häufig werden als wichtige Qualitätsmerkmale für das Polycarbonat eine gute Thermostabilität und eine geringe Vergilbung beschrieben. Wenig Beachtung fand bisher die Qualität des bei der Herstellung von Polycarbonaten anfallenden Abwassers. Insbesondere die Belastung des Abwassers mit Restorganika wie z.B. Restphenolen ist dabei von Bedeutung für eine evtl. weitere Behandlung des Abwassers z.B. durch eine Kläranlage oder durch eine Ozonolyse zur Oxidation der Restorganika. Hier hat es eine Reihe von Anmeldungen gegeben, in denen aber überwiegend Methoden zur nachträglichen Abwasserbehandlung beschrieben werden, mit dem Ziel, die Belastung an phenolischen Komponenten zu reduzieren wie z.B. in JP 08 245 780 A, DE 19 510 063 A1, JP 03 292 340 A, JP 03 292 341 A und JP 02 147 628 A beschrieben.

Die Belastung des Abwassers mit Restorganika wie z.B. mit Bisphenolen oder Phenolen kann gering gehalten werden, indem mit einem hohem Phosgenüberschuss gearbeitet wird. Dies ist aber aus wirtschaftlichen Gründen unerwünscht.

Bei der Herstellung von Polycarbonaten mit reduziertem Phosgenüberschuss besteht die Gefahr, dass nicht alles Bisphenol bzw. alles Monophenol abreagiert, in das Abwasser gelangt und das Abwasser belastet. Weiterhin besteht die Gefahr, dass die Phasenseparation und die Wäsche, dadurch, dass im Polymer grenzflächenaktive phenolische OH-Gruppen verbleiben, erschwert wird. Dadurch werden gegebenenfalls nicht alle wasserlöslichen Verunreinigungen aus der organischen Phase extrahiert. Dies kann wiederum die Produktqualität negativ beeinflussen.

Es bleibt festzuhalten, dass die Herstellung von Polycarbonat hoher Qualität nach einem kontinuierlichen Zweiphasengrenzflächenverfahren bei gleichzeitig geringer Belastung des Abwassers nach dem Stand der Technik entweder nur mit hohem Phosgenüberschuss oder mit Phasentrennproblemen, verbunden mit Qualitätseinbußen des Polycarbonates, oder durch nachträgliche Behandlung des Abwassers möglich ist, wodurch die Wirtschaftlichkeit des Verfahrens reduziert wird.

Bei diesen bekannten Verfahren macht jedoch ein hoher Restphenolwert im Abwasser dieser Prozesse, welche die Umwelt belasten können und die Klärwerke vor eine erhöhte Abwasserproblematik stellen, aufwendige Reinigungsoperationen erforderlich. So beschreibt WO 03/070639 A1 eine Entfernung der organischen Verunreinigungen im Abwassers durch eine Extraktion mit Methylenchlorid.

Üblicherweise wird die Natriumchlorid-haltige Lösung von Lösungsmitteln und organischen Resten befreit und wird dann entsorgt.

Bekannt ist auch, dass die Reinigung der Natriumchlorid-haltigen Abwässer gemäß der EP 1 200 359 A1 oder US 6,340,736 A durch Ozonolyse erfolgen kann und dann bei der Natriumchlorid-Elektrolyse eingesetzt werden kann. Nachteil dieses Verfahren ist die sehr kostenintensive Ozonolyse.

Gemäß der EP 541 114 A2 wird ein Natriumchlorid-haltiger Abwasserstrom bis zur vollständigen Entfernung des Wassers eingedampft und das zurückbleibende Salz mit den organischen Verunreinigungen einer thermischen Behandlung unterzogen, wodurch die organischen Bestandteile zersetzt werden. Besonders bevorzugt ist dabei der Einsatz von Infrarotstrahlung. Nachteil des Verfahrens ist, dass das Wasser vollständig verdampft werden muss, so dass das Verfahren wirtschaftlich nicht durchführbar ist.

Gemäß der WO 03/070639 wird das Abwasser aus einer Polycarbonatproduktion durch Extraktion gereinigt und dann der Natriumchlorid-Elektrolyse zugeführt. Es können jedoch nur max. 14% des Natriumchlorids aus dem Abwasser der Polycarbonat-Produktion in die NaCl-Elektrolyse zurückgeführt werden, da bei größeren Mengen an NaCl-haltigem Abwasser das mit dem NaCl-haltigen Abwasser in die Elektrolyse eingebrachte Wasser die Wasserbilanz der Natriumchlorid-Elektrolyse aus dem Gleichgewicht bringen würde.

Die Natriumchlorid-haltigen Lösungen, die bei der Polycarbonat-Produktion anfallen, haben typischerweise einen Natriumchlorid-Gehalt von 6 bis 10 Gew.-%. Somit kann nie das in den Lösungen vorhandene gesamte Natriumchlorid wieder bei der NaCl-Elektrolyse zu Chlor und Natronlauge rezykliert werden. Bei einer Natriumchlorid-Konzentration von 10 Gew.-% gelingt bei der Standard-Natriumchlorid-Elektrolyse mit einer handelsüblichen Ionenaustauschermembran, die einen Wassertransport von 3,5 mol Wasser je mol Natrium aufzeigt, nur der Einsatz von ca. 13 % des Natriumchlorids aus dem Natriumchlorid-haltigen Lösungen. Bei Aufkonzentrierung bis zu einer gesättigten Natriumchlorid-Lösung von ca. 25 Gew.-% gelänge eine Recyclingquote von 38 % des in der Natriumchlorid-haltigen Lösung enthaltenden Natriumchlorids. Ein vollständiges Recycling der Natriumchlorid-haltigen Lösung ist derzeit nicht bekannt.

Aufkonzentrierungsverfahren, wodurch dem alkalichloridhaltigen Abwasser Wasser entzogen wird, sind bekannt.

Gemäß der WO 01/38419 kann die Natriumchlorid-haltige Lösung mittels thermischer Verfahren eingedampft werden, so dass eine hoch konzentrierte Natriumchlorid-Lösung der Elektrolysezelle zugeführt werden kann. Die Eindampfung ist jedoch energieintensiv und kostspielig.

Auch können beispielsweise die Umkehrosmose oder besonders bevorzugt die Membrandestillation oder Membrankontaktoren eingesetzt werden (siehe MELIN; RAUTENBACH, Membranverfahren; SPRINGER, BERLIN, 2003). Nachteilig hierbei ist der hohe Energiebedarf zur Überwindung der hohen osmotischen Drücke, wodurch die Wirtschaftlichkeit nicht mehr gegeben ist.

Die voranstehenden integrierten Verfahren haben allesamt den Nachteil, dass in Kombination mit einer Polycarbonat-Herstellung nur begrenzt konzentrierte NaCl-Lösungen (6 - 10 Gew%) der Elektrolyse zugeführt werden, so, dass eine Wiederverwertung von NaCl nur im beschränkten Umfang möglich ist oder die Aufkonzentrierung energieintensiv und kostspielig ist.

Ausgehend vom oben geschilderten Stand der Technik ist die Aufgabe, ein Polycarbonatherstellungsverfahren bereitzustellen, bei dem während des Recyclings des Abwasser die Umsetzung von Natriumchlorid zu Chlor und Natronlauge und gegebenenfalls Wasserstoff mit minimalem Energieeinsatz und daher besonders wirtschaftlich und resourcenschonend erfolgen. Weiterhin soll ein Verfahren bereitgestellt werden, welches Produkte in hoher Reinheit und guter Ausbeute liefert und eine Reduzierung der Umweltbelastung bzw. Abwasserproblematik in den Klärwerken ermöglicht.

Die Aufgabe wird dadurch gelöst, dass im Verfahren die Verwertung von Natriumchlorid-haltigen Abwasserphasen durch eine vorgelagerte Aufkonzentrierung der NaCl-Lösung aus der Polycarbonat-Herstellung für die Elektrolyse mit Hilfe einer osmotischer Membrandestillation erfolgt.

Es wurde gefunden, dass die bei der kontinuierlichen Herstellung von Polycarbonat durch Reaktion von Bisphenolen und Phosgen in einem inerten Lösungsmittel oder Lösungsmittelgemisch in Gegenwart von Alkali und Stickstoffkatalysator eine verbesserte Rückführung von Natriumchlorid aus den in der Grenzfläche anfallenden Natriumchlorid-haltigen Abwasserlösungen ohne aufwendige Reinigung nach pH-Einstellung auf einen pH kleiner oder gleich 8 und nach einfacher Behandlung mit Aktivkohle direkt in einer osmotischen Membrandestillation aufkonzentriert werden können und einer elektrochemischen Oxidation des enthaltenen Natriumchlorids zu Chlor, Natronlauge und gegebenenfalls Wasserstoff erzielt werden können, wobei das Chlor zur Herstellung des Phosgens rückgeführt werden kann.

Gegenstand der Erfindung ist daher ein Verfahren zur Herstellung von Polycarbonat und Verwertung der dabei anfallenden Abwasserphasen. Insbesondere besteht das Verfahren in der Aufkonzentrierung der anfallenden alkalichloridhaltigen Abwasserphasen des Polycarbonat-Herstellungsverfahren zur Verarbeitung in einer nachgeschalteten Alkalichlorid-Elektrolyse durch osmotische Membran Destillation. Dabei kann optional gleichzeitig eine aus der Elektrolyse gebildeten Natronlauge verdünnt werden, die im Anschluß direkt als Edukt in das Polycarbonat-Verfahren eingesetzt werden kann.

Das erfindungsgemäße Verfahren umfasst wenigstens folgende Schritte:
(a) Herstellung von Phosgen durch Umsetzung von Chlor mit Kohlenmonoxid,
(b) Umsetzung des gemäß Schritt a) gebildeten Phosgens mit wenigstens einem Bisphenol in Gegenwart einer wässrigen Alkali-haltigen Base, insbesondere einer Natrium-haltigen Base, gegebenenfalls eines Stickstoffkatalysators und gegebenenfalls organisches Lösungsmittel zu einem Polycarbonat und einer alkalichloridhaltigen, insbesondere einer Natriumchlorid-haltigen Reaktionsabwasserlösung,
(c) Abtrennung und Aufarbeitung des in Schritt b) gebildeten Polycarbonats,
(d) Abtrennung der Lösungsmittelreste und gegebenenfalls Katalysatorreste von der aus Schritt c) verbliebenen alkalichloridhaltigen Lösung (d1), insbesondere durch Extraktion oder Strippen der Lösung mit Wasserdampf und anschließende Behandlung mit Adsorbentien (d2), insbesondere mit Aktivkohle,
(e) Osmotische Membrandestillation wenigstens eines Teils der aus Schritt d) verbliebenen alkalichloridhaltigen Lösung,
(f) Elektrochemische Oxidation wenigstens eines Teils der alkalichloridhaltigen Lösung aus e) unter Bildung von Chlor, Alkalilauge und ggf. Wasserstoff;
   wobei die alkalichloridhaltige Lösung, in Schritt e) mittels osmotischer Destillation mit Alkalilauge als Wasserakzeptor aufkonzentriert wird.

In einer besonders bevorzugten Ausführungsform ist das Verfahren dadurch gekennzeichnet, dass nach dem Teilschritt dl) vor der Behandlung mit Adsorbentien (d2) die Lösung auf einen pH-Wert kleiner oder gleich 8, bevorzugt 6 bis 8, eingestellt wird.

In einer weiteren besonderen Ausführungsform wird wenigstens ein Teil des gemäß Schritt f) hergestellten Chlors in die Herstellung von Phosgen gemäß Schritt a) zurückgeführt:

In einer weiteren bevorzugten Ausführungsform wird wenigstens ein Teil des gemäß Schritt f) hergestellten Alkalilauge in die osmotische Membrandestillation gemäß Schritt e) als Wasserakzeptor eingesetzt.

In einer weiteren besonders bevorzugten Ausführungsform wird wenigstens ein Teil der gemäß Schritt e) erhaltenen verdünnten Alkalilauge in die Herstellung von Polycarbonat gemäß Schritt b) zurückgeführt.

Die nach Abtrennung gemäß Schritt c) erhaltene alkalichloridhaltige Lösung (Reaktionsabwasser) kann einzeln oder vereinigt mit den Waschphasen aus der Aufarbeitung (Gesamtprozessabwasser), bevorzugt einzeln, nach Abtrennung von Lösungsmittelresten und gegebenenfalls Katalysatorresten gemäß Schritt d), in der osmotischen Membrandestillation eingesetzt werden.

Geeignete Bisphenole sind solche der allgemeinen Formel

HO-Z-OH,

in denen Z ein aromatischer Rest mit 6 bis 45 C-Atomen ist, der einen oder mehrere aromatische Kerne enthalten kann, substituiert sein kann und aliphatische Reste oder cycloaliphatische Reste oder Heteroatome als Brückenglieder enthalten kann.

Beispiele solcher Verbindungen, die in das erfindungsgemäße Verfahren eingesetzt werden können sind Dihydroxydiarylalkane wie Hydrochinon, Resorcin, Dihydroxydiphenyl, Bis-(hydroxyphenyl)-alkane, Bis(hydroxyphenyl)-cycloalkane, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide, α,α'-Bis-(hydroxyphenyl)-diisopropylbenzole, Bis-(hydroxyphenyl)-phtalimidine sowie deren alkylierte, kernalkylierte und kernhalogenierte Verbindungen.

Bevorzugte Bisphenole sind 4,4'-Dihydroxydiphenyl, 2,2-Bis-(4-hydroxyphenyl)-1-phenyl-propan, 1,1-Bis-(4-hydroxyphenyl)-phenyl-ethan, 2,2-Bis-(4-hydroxyphenyl)propan (Bisphenol A (BPA)), 2,4-Bis-(4-hydroxyphenyl)-2-methylbutan, 1,3-Bis-[2-(4-hydroxyphenyl)-2-propyl]benzol (Bisphenol M), 2,2-Bis-(3-methyl-4-hydroxyphenyl)-propan, Bis-(3,5-dimethyl-4-hydroxyphenyl)-methan, 2,2-Bis-(3,5-dimethyl-4-hydroxyphenyl)-propan, Bis-(3,5-di-methyl-4-hydroxyphenyl)-sulfon, 2,4-Bis-(3,5-dimethyl-4-hydroxyphenyl)-2-methylbutan, l,3-Bis-[2-(3,5-dimethyl-4-hydroxyphenyl)-2-propyl]-benzol, 1,1-Bis-(4-hydroxyphenyl)-cyclohexan, 2-Hydrocarbyl-3,3-bis(4-hydroxyaryl)phthalimidine, 3,3-Bis(4-hydroxyaryl)-1-aryl-1H-indol-2-on, 2,2-Bis(4-hydroxyaryl)-1-aryl-1H-indol-2-on und 1,1-Bis-(4-hydroxyphenyl)-3,3,5-trimethylcyclohexan (Bisphenol TMC).

Besonders bevorzugte Bisphenole sind 4,4'-Dihydroxydiphenyl, 1,1-Bis-(4-hydroxyphenyl)-phenylethan, 2,2-Bis-(4-hydroxyphenyl)-propan (Bisphenol A (BPA)), 2,2-Bis(3,5-dimethyl-4-hydroxyphenyl)-propan, 1,1-Bis-(4-hydroxyphenyl)-cyclohexan, 2-Hydrocarbyl-3,3-bis(4-hydroxyphenyl)phthalimidin, 3,3-Bis(4-hydroxyphenyl)-1-phenyl-1H-indol-2-on, 2,2-Bis(4-hydroxyphenyl)-1-phenyl-1H-indol-2-on, 3,3-Bis(4-hydroxyphenyl)-1-methyl-1H-indol-2-on, 2,2-Bis(4-hydroxyphenyl)-1-methyl-1H-indol-2-on, 3,3-Bis(4-hydroxyphenyl)-N-methyl-phthalimidin, 3,3-Bis(4-hydroxyphenyl)-N-phenyl-phthalimidin und 1,1-Bis-(4-hydroxyphenyl)-3,3,5-trimethylcyclohexan (Bisphenol TMC).

Diese und weitere geeignete Bisphenole sind z.B. in den US 2 970 131 A, US 2 991 273 A, US 2 999 835 A, US 2 999 846 A, US 3 028 365 A, US 3 062 781 A, US 3 148 172 A, US 3 271 367 A, US 3 275 601 A, US 3 271 367 A und US 4 982 014 A, in den deutschen Offenlegungsschriften DE 1 570 703 A, DE 2 063 050 A, DE 2 036 052 A, DE 2 211 956 A, DE 3 832 396 A und DE 38 33 953 A, der französischen Patentschrift FR 1 561 518, in der Monographie von H. Schnell, Chemistry and Physics of Polycarbonates, Interscience Publishers, New York 1964, S. 28ff; S.102ff und von D.G. Legrand, J.T. Bendler, Handbook of Polycarbonate Science and Technology, Marcel Dekker New York 2000, S. 72ff. beschrieben.

Es sei hier betont, dass das erfindungsgemäße Verfahren praktisch für alle bekannten Bisphenole eingesetzt werden kann.

Geeignete Kettenabbrecher und Verzweiger sind literaturbekannt. Einige sind beispielsweise in der DE 38 33 953 A beschrieben. Bevorzugte Kettenabbrecher sind Phenol, Cumylphenol, Isooctylphenol und para-tert.-Butylphenol.

Bevorzugte Verzweiger sind Trisphenole und Tetraphenole sowie 3,3-Bis-(3-methyl-4-hydro-xyphenyl)-2-oxo-2,3-dihydroindol.

Das eingesetzte Alkali zur Bildung des Bisphenolats kann eine Alkalilauge mit Hydroxiden aus der Reihe: Na-, K-, Li-Hydroxid sein, gegebenenfalls können auch Erdalkalilaugen eingesetzt werden. Bevorzugt ist Natronlauge, und wird im neuen Verfahren vorzugsweise als 10 bis 55 Gew.-%-ige Lösung eingesetzt.

Als Katalysatoren kommen für die Reaktion b) kommen im Prinzip durch alle für die Herstellung von Polycarbonaten nach dem Zweiphasengrenzflächenverfahren bekannten Katalysatoren, wie tertiäre Amine, N-Alkylpiperidine oder Pyridin im Frage.

Der eingesetzte Amin-Katalysator kann offenkettig oder cyclisch sein, besonders bevorzugt ist Triethylamin und Ethylpiperidin. Der Katalysator wird im neuen Verfahren vorzugsweise als 1 bis 55 Gew.-%-ige Lösung eingesetzt.

Phosgen kann in dem Verfahrensschritt b) flüssig, gasförmig oder gelöst in einem inerten Lösungsmittel eingesetzt werden.

In dem neuen Verfahren in Schritt b) bevorzugt verwendbare inerte organische Lösungsmittel sind alle bekannten Lösungsmittel, die Polycarbonat bei Temperaturen um 20°C zu mindestens 5 Gew.-% zu lösen in der Lage sind sowie deren Gemische. Bevorzugt sind beispielsweise Dichlormethan, Toluol, die verschiedenen Dichlorethane und Chlorpropanverbindungen, Chlorbenzol und Chlortoluol. Vorzugsweise wird Dichlormethan oder ein Gemisch aus Dichlormethan und Chlorbenzol eingestzt. Besonders bevorzugt sind Dichlormethan und Gemische aus Dichlormethan und Monochlorbenzol im Verhältnis von 20:80 Gew.-Teilen bis 75:25 Gew.-Teilen.

Über die gesamte Reaktion wird ein pH-Wert zwischen 9 und 14 eingestellt, bevorzugt zwischen 9,5 und 13,0. Dies geschieht dadurch, dass einmal zu Beginn die zum Lösen der Bisphenole notwendige Menge Alkalilauge eingesetzt wird und darüber hinaus vor dem Wärmetauscher eine erste Nachdosierung der Alkalilauge erfolgt und daran anschließend vor den Rohrreaktoren gegebenenfalls zusammen mit dem Kettenabbrecher eine zweite Nachdosierung der Alkalilauge erfolgt.

Die nach dem erfindungsgemäßen Verfahren erhältlichen Polycarbonate können als beliebige Formkörper oder auch Platten und Folien in bekannter Weise technisch eingesetzt werden, beispielsweise im Automobilsektor oder in optischen Anwendungen, optischen und magneto-optischen Speichermedien

Die Reaktionsführung für Schritt b) erfolgt bevorzugt kontinuierlich und besonders bevorzugt in einer Pfropfenströmung ohne große Rückvermischung. Dies kann somit beispielsweise in Rohrreaktoren geschehen. Die Durchmischung der zwei Phasen (wässrige und organische Phase) kann durch eingebaute Rohrblenden, statische Mischer und/oder beispielsweise Pumpen realisiert werden.

Die Reaktion gemäß Schritt b) erfolgt besonders bevorzugt zweistufig.

In der ersten Stufe des bevorzugten Verfahrens wird die Reaktion durch Zusammenbringen der Edukte Phosgen, des inerten Lösungsmittels oder Lösungsmittelgemisches, welches bevorzugt erst als Lösungsmittel für das Phosgen dient, und des Bisphenols, welches vorzugsweise zuvor bereits in der Alkalilauge gelöst ist, gestartet. Die Verweilzeit liegt typischerweise in der ersten Stufe im Bereich von 2 Sekunden bis 300 Sekunden, besonders bevorzugt im Bereich von 4 Sekunden bis 200 Sekunden. Der pH-Wert der ersten Stufe wird durch das Verhältnis von Alkalilauge/ Bisphenol /Phosgen bevorzugt so eingestellt, dass der pH-Wert im Bereich von 11,0 bis 12,0, bevorzugt 11,2 bis 11,8, besonders bevorzugt bei 11,4 bis 11,6 liegt. Die Reaktionstemperatur der ersten Stufe wird durch Kühlung bevorzugt <40°C, besonders bevorzugt <35°C gehalten.

In der zweiten Stufe des bevorzugten Verfahrens wird die Reaktion zum Polycarbonat komplettiert. Die Verweilzeit beträgt beim bevorzugten Prozess 1 Minute bis 2 Stunden, bevorzugt 2 Minuten bis 1 Stunde, ganz besonders bevorzugt 3 Minuten bis 30 Minuten. In der zweiten Stufe des bevorzugten Verfahrens wird durch permanente Kontrolle des pH-Werts (wird im kontinuierlichen Verfahren bevorzugt Online nach grundsätzlich bekannten Verfahren gemessen) und entsprechende Einstellung des pH-Wertes durch Zugabe der Alkalilauge geregelt. Die Menge zugeführten Alkalilauge wird insbesondere so eingestellt, dass der pH-Wert der Reaktionsmischung in der zweiten Verfahrensstufe im Bereich von 7,5 bis 10,5, bevorzugt 8 bis 9,5, ganz besonders bevorzugt 8,2 bis 9,3 liegt. Die Reaktionstemperatur der zweiten Stufe wird durch Kühlung bei bevorzugt <50°C, besonders bevorzugt <40°C, ganz besonders bevorzugt <35°C gehalten.

Die in dieser Anmeldung aufgeführten allgemeinen oder in Vorzugsbereichen aufgeführten Parameter bzw. Erläuterungen können jedoch auch untereinander, also zwischen den jeweiligen Bereichen und Vorzugsbereichen beliebig kombiniert werden.

Im bevorzugten Verfahren wird in Schritt b) Phosgen in Bezug auf das Bisphenol im MolVerhältnis von 1 : 2 bis 1 : 2,2 eingesetzt. Das Lösungsmittel wird so zugemischt, dass das Polycarbonat in einer 5 bis 60 %igen Lösung, bevorzugt 20 bis 45 %igen Lösung nach der Reaktion vorliegt.

Die Konzentration des Katalysators beträgt bevorzugt 0,0001 mol bis 0,1 mol, bezogen auf das eingesetzte Bisphenol.

Nach der Reaktion b) wird in Schritt c) bevorzugt die organische, den Polycarbonat enthaltende Phase üblicherweise mit einer wässrigen Flüssigkeit gewaschen und nach jedem Waschvorgang von der wässrigen Phase soweit wie möglich getrennt. Die Wäsche erfolgt bevorzugt mit entsalztem Wasser. Die Polycarbonatlösung ist nach der Wäsche und Abtrennung der Waschflüssigkeit üblicherweise trüb. Als Waschflüssigkeit werden wässrige Flüssigkeiten zur Abtrennung des Katalysators, z.B. eine verdünnte Mineralsäure wie HCl oder H₃PO₄, und zur weiteren Reinigung vollentsalztes Wasser eingesetzt. Die Konzentration von HCl oder H₃PO₄ in der Waschflüssigkeit kann beispielsweise 0,5 bis 1,0 Gew.-% betragen. Die organische Phase wird beispielhaft und einmal, vorzugsweise mehrmals gewaschen.

Als Phasentrennvorrichtungen zur Abtrennung der Waschflüssigkeit von der organischen Phase können grundsätzlich bekannte Trenngefäße, Phasenseparatoren, Zentrifugen oder Coalescer oder auch Kombinationen dieser Einrichtungen verwendet werden.

Man erhält so ohne Berücksichtigung des noch abzutrennenden Lösungsmittels überraschend hohe Reinheitsgrade des Polycarbonats von >99,85 %.

In einer bevorzugten Ausführungsform des erfindungsgemäßen Verfahrens können die in Schritt c) abgetrennten Waschflüssigkeiten gegebenenfalls nach Trennung von Katalysatorresten und/oder organischen Lösungsmittelresten wieder in das erfindungsgemäße Verfahren zurückgeführt werden.

Dabei kann die Abtrennung und Aufarbeitung des in Schritt b) gebildeten Polycarbonats gemäß Schritt c) bevorzugt wenigstens die folgenden Schritte umfassen:
aa) Trennung von Polycarbonat enthaltender organischer Phase und wässriger alkalichloridhaltiger Reaktionsabwasserlösung
bb) wenigstens einmaliges, bevorzugt wenigstens zweimaliges, besonders bevorzugt fünfmaliges Waschen der in Schritt aa) erhaltenen Polycarbonat enthaltenden organischen Phase und Abtrennen der jeweiligen Waschflüssigkeit.

Gegebenenfalls kann es erforderlich sein, wenigstens eine der gemäß Schritt c) bb) erhaltenen Waschflüssigkeit(en) von Katalysatorresten und gegebenenfalls organischen Lösungsmittelresten durch Einstellung des pH Wertes auf mindestens 9, bevorzugt mindestens 10, besonders bevorzugt 10 bis 11, durch Zugabe wenigstens einer basischen Verbindung zu trennen und einer anschließenden Extraktion mit wenigstens einem inerten organischen Lösungsmittel oder bevorzugt einem anschließenden Strippen der Lösung mit Wasserdampf zu unterziehen. Als basische Verbindungen zur Einstellung des pH-Wertes eignen sich beispielsweise Alkali- oder Erdalkalihydroxide oder -carbonate. Die basischen Verbindungen können in fester Form oder in Form ihrer wässrigen Lösungen eingesetzt werden. Bevorzugt werden Alkalilaugen, besonders bevorzugt Natronlauge verwendet. Auch bei Schritt (d1) werden bevorzugt diese pH-Werte mit Hilfe der hier genannten Verbindungen eingestellt.

Vorzugsweise kann wenigstens ein Teil der Waschflüssigkeit(en) aus Schritt c) bb) als Teilersatz des Wassers zur Herstellung, insbesondere zur Einstellung der Konzentration der Natronlauge für Schritt b) verwendet werden. In einer bevorzugten Ausführungsform des erfindungsgemäßen Verfahrens kann wenigstens ein Teil der Waschflüssigkeit(en) aus Schritt c) bb) zur Verdünnung der gemäß Schritt e) und/oder f) hergestellten Alkalilauge verwendet werden, bevor diese in die Herstellung von Polycarbonat gemäß Schritt b) zurückgeführt wird.

Die bevorzugte Ausführungsform des erfindungsgemäßen Verfahrens, bei der die in Schritt c) abgetrennten Waschflüssigkeiten wieder in das erfindungsgemäße Verfahren zurückgeführt werden, bietet den zusätzlichen Vorteil geringerer Abwasseremission.

Nach der Synthese des Polycarbonats wird das Polycarbonat in Form seiner Lösung in dem bei der Synthese verwendeten organischen Lösungsmittel oder Lösungsmittelgemisch, beispielsweise Methylenchlorid oder Methylenchlorid/Chlorbenzol, abgetrennt.

Zum Erhalt des hochreinen Polycarbonats wird das Lösungsmittel verdampft. Das Verdampfen kann in mehreren Verdampferstufen erfolgen. Beispielsweise erfolgt dies durch eine oder mehrere hintereinander geschaltete Destillationskolonnen bei der das Lösungsmittel vom Polycarbonat abgetrennt wird.

Diese Reinigungsstufe c) bzw. Stufen können beispielsweise kontinuierlich so geführt werden, dass die Sumpftemperatur bei der Destillation 150°C bis 310°C, bevorzugt 160 bis 230°C beträgt. Der zur Durchführung dieser Destillation angewendete Druck beträgt dabei insbesondere 1 bis 1000 mbar, bevorzugt 5 bis 100 mbar.

Die so gereinigten Polycarbonate zeichnen sich durch sehr gute Produkteigenschaften aus, so dass hieraus anschließend Formteile in exzellenter Qualität hergestellt werden kann.

Die verbleibende alkalichloridhaltige Lösung gemäß Schritt c) wird vorteilhafterweise von leicht flüchtigen organischen Verunreinigungen, wie z.B. Reste des bei der Synthese verwendeten organischen Lösungsmittels und ggf. Katalysator beispielsweise durch Destillation oder Wasserdampfstrippen befreit. Es verbleibt dann ein Abwasser mit einem hohen Gehalt an gelöstem Natriumchlorid (5-10 Gew.-%) und gelösten Natriumcarbonaten (0,3-1,5 Gew.-%). Die Carbonate entstehen dabei z.B. durch Hydrolyse des Phosgens als Nebenreaktion der Polycarbonatherstellung. Außerdem ist das Abwasser mit organischen Verbindungen belastet, z.B. mit Phenolen (z.B. unsubstituiertes Phenol, Alkylphenole).

Die Behandlung des vorgereinigten Abwassers mit Adsorbentien erfolgt dann bevorzugt mit Aktivkohle.

Gemäß einem bevorzugten Verfahren wird die Erniedrigung des pH-Wertes nach dem Prozessteilschritt d1) vor Behandlung mit Absorbentien (d2) mit Salzsäure oder Chlorwasserstoff durchgeführt. Bevorzugt wird der pH-Wert auf weniger als 8, besonders bevorzugt auf 4 bis 8 verringert. Der grundsätzlich denkbare, aber im vorliegenden Verfahren unerwünschte Einsatz der preiswerteren Schwefelsäure würde dazu führen, dass bei der pH-Erniedrigung Natriumsulfat entstünde, dass bei der anschließenden Elektrolyse im Anolytkreislauf angereichert werden würde. Da z.B. die Ionenaustauschermembranen gemäß Herstellerangaben nur bis zu einer bestimmten Natriumsulfat-Konzentration im Anolyten betrieben werden dürfen, müsste mehr Anolyt ausgeschleust werden als bei Einsatz von Salzsäure oder Chlorwasserstoff, dessen Reaktionsprodukt das gewünschte Natriumchlorid ist.

Eine bevorzugte Verfahrensvariante ist, dass dem alkalichloridhaltigen Abwasser durch ein Aufkonzentrierungsverfahren Wasser entzogen wird.

Die Auflconzentrierung von NaCl-Lösungen durch osmotische Destillation ist energieschonend, insbesondere dann, wenn in einer bevorzugten Ausführungsform die aus der NaCl-Elektrolyse stammende NaOH-Lösung als Wasserakzeptor eingesetzt wird. Dies hat besonders dann Vorteile, wenn in der Polycarbonat-Produktion eine verdünnte Natronlauge eingesetzt wird, wobei dann zusätzlich das Wasser zur Verdünnung der Natronlauge eingespart werden kann.

In dem erfindungsgemäßen Verfahren wird daher die alkalichloridhaltige Lösung aus d) vor der Elektrolyse f) mittels osmotischer Destillation, Schritt e), mit Natronlauge als Wasserakzeptor aufkonzentriert.

Durch Kombination von erfindungsgemäßem Betrieb der Elektrolysezellen und Aufkonzentrierungsverfahren können theoretisch bis zu 68 % des Natriumchlorids aus dem Abwasser wieder gewonnen werden. Dies gilt für den Fall, dass die Natriumchlorid-Elektrolyse nur das benötigte Chlor für die Phosgenherstellung und die benötigte Natronlauge für die Polycarbonatherstellung produziert und kein Chlor für andere Anwendungen bereitstellt.

Die osmotische Destillation erfolgt durch molekulare und gegebenenfalls Knudsen Diffusion von Wasserdampf durch eine Membran. Dadurch ist die Diffusionsrate abhängig vom Unterschied zwischen den Wasserdampfdrücken auf beiden Seiten der Membran, sowie deren Porosität, Stärke und Gewundenheit.

Um eine effiziente Aufkonzentrierung zu ermöglichen, sollte als Wasser-Akzeptor eine konzentrierte Lösung eines Alkalihydroxids, bevorzugt Natrium- oder Kaliumhydroxid, besonders bevorzugt Natriumhydroxid verwendet werden.

Für das erfindungemäße Verfahren sollte als Membranwerkstoff ein chemisch beständiger Werkstoff wie z.B. Polypropylen eingesetzt werden. Die Membranen sollten bevorzugt Kapillarmembranen mit einer Kapillarlänge von 30-6000µm und einem Durchmesser von 0,01 bis 0,7µm eingesetzt werden.

Besonders geeignete Membranen sind lipophile Membrane, wie beispielweise Accurel PP 50/200, Accurel PP 50/280, Accurel PP 150/330, Accurel PP Q3/2 oder Accurel S 6/2 der Firma Membrana.

Das Verfahren wird bevorzugt so betrieben, dass die osmotische Destillation bei einer Temperatur von 10 bis 100°C, vorzugsweise bei 20 bis 50°C betrieben wird. Die Temperatur der eingesetzten Natronlauge kann dabei höher sein als die des NaCl-haltigen Abwassers.

Die osmotische Destillation wird bei einem Absolutdruck von 1 bis 1,4 bar, bevorzugt bei einem Druck von 1,1 bis 1,2 bar betrieben.

Die Druckverhältnisse zwischen Alkalichloridlösung und Alkalihydroxidlösung werden insbesondere so gewählt, dass der osmotischer Druck der Alkalichloridlösung höher ist als der Druck der Alkalihydroxidlösung.

Der Differenzdruck zwischen Alkalichloridlösung und Alkalihydroxidlösung sollte in einem besonders bevorzugten Verfahren 20 bis 150 bar, vorzugsweise 30 bis 100 bar betragen.

Das Verfahren der Alkalichlorid-Elektrolyse wird im folgenden näher beschrieben. Die nachstehende Beschreibung ist in Bezug auf die Elektrolyse von Natriumchlorid beispielhaft anzusehen, da im Verfahren wie bereits oben ausgeführt wurde grundsätzlich jedes Alkalichlorid zum Einsatz kommen kann (insbesondere Li-, Na-, KCl), die Verwendung von Natriumchlorid bzw. Natronlauge in den vorgehenden Stufen aber die bevorzugte Ausführung des Verfahrens ist.

Üblicherweise werden z.B. zur Elektrolyse von Natriumchlorid-haltigen Lösungen Membranelektrolyseverfahren eingesetzt (siehe hierzu Peter Schmittinger, CHLORINE, Wiley-VCH Verlag, 2000). Hierbei wird eine zweigeteilte Elektrolysezelle eingesetzt, die aus einem Anodenraum mit einer Anode und einem Kathodenraum mit einer Kathode besteht. Anoden- und Kathodenraum werden von einer Ionenaustauschermembran getrennt. In den Anodenraum wird eine Natriumchlorid-haltige Lösung mit einer Natriumchlorid-Konzentration von üblicherweise mehr als 300 g/l eingeführt. An der Anode wird das Chlorid-Ion zu Chlor oxidiert, dass mit der abgereicherten Natriumchlorid-haltigen Lösung (ca. 200 g/l) aus der Zelle geführt wird. Die Natrium-Ionen wandern unter Einfluss des elektrischen Feldes durch die Ionenaustauschermembran in den Kathodenraum. Bei dieser Wanderung nimmt jedes mol Natrium je nach Membran zwischen 3,5 und 4 mol Wasser mit. Dies führt dazu, dass der Anolyt an Wasser verarmt. Im Gegensatz zum Anolyten wird auf der Kathodenseite durch die Elektrolyse von Wasser zu Hydroxid-Ionen und Wasserstoff Wasser verbraucht. Das mit den Natrium-Ionen in den Katholyten gelangende Wasser reicht aus, um die Natronlauge-Konzentration im Auslauf auf 31-32 Gew.-% zu halten, dies bei einer Einlaufkonzentration von 30% und einer Stromdichte von 4 kA/m². Im Kathodenraum wird Wasser elektrochemisch reduziert, wobei Hydroxid-Ionen und Wasserstoff entstehen.

Alternativ kann als Kathode auch eine Gasdiffusionselektrode eingesetzt werden, an der Sauerstoff mit Elektronen zu Hydroxid-Ionen umgesetzt wird, wobei kein Wasserstoff entsteht. Mit den über die Ionenaustauschermembran in den Kathodenraum gelangten Natrium-Ionen bilden die Hydroxid-Ionen Natronlauge. In die Kathodenkammer wird üblicherweise eine Natronlauge mit einer Konzentration von 30 Gew.-% zugeführt und eine Natronlauge mit einer Konzentration von 31-32 Gew.-% abgeführt. Ziel ist es eine möglichst hohe Konzentration an Natronlauge zu erreichen, da üblicherweise die Natronlauge als 50 Gew.-%ige Lauge gelagert oder transportiert wird. Handelsübliche Membranen sind jedoch derzeit nicht beständig gegen eine Lauge mit einer höheren Konzentration als 32 Gew.-%, so dass die Natronlauge durch thermische Eindampfung aufkonzentriert werden muss.

Im Falle der Natriumchlorid-Elektrolyse wird über diese Natriumchlorid-haltige Lösung zusätzliches Wasser in den Anolyten eingebracht, jedoch nur Wasser über die Membran in den Katholyten ausgetragen. Wird mehr Wasser über die Natriumchlorid-haltige Lösung eingebracht als zum Katholyten transportiert werden kann, verarmt der Anolyt an Natriumchlorid und die Elektrolyse kann nicht kontinuierlich betrieben werden. Bei sehr geringen Natriumchlorid-Konzentrationen würde die Nebenreaktion der Sauerstoffbildung einsetzen. Um maximale Mengen an Natriumchlorid-haltigen Lösungen wirtschaftlich der Natriumchlorid-Elektrolyse zuzuführen, kann es nützlich sein, dass der Wassertransport über die Membran erhöht wird. Dieser kann durch Auswahl geeigneter Membranen erfolgen, wie in der US 4,025,405 A beschrieben. Der Effekt eines erhöhten Wassertransportes ist, dass auf die sonst übliche Wasserzugabe zur Aufrechterhaltung der Laugekonzentration verzichtet werden kann.

Gemäß der US 3,773,634 A kann bei hohem Wassertransport durch die Membran die Elektrolyse dann betrieben werden, wenn eine Laugekonzentration von 31 bis 43 Gew.-% und eine Natriumchlorid-Konzentration von 120 bis 250 g/l eingesetzt wird.

Nachteil beider Verfahren ist die niedrigere Stromausbeute dieser Verfahren, wodurch die Wirtschaftlichkeit der Elektrolyse beeinträchtigt wird.

Gemäß dem bevorzugten Verfahren erfolgt die Abtrennung d2) des Natriumchlorid-haltigen Reaktionsabwassers nach der Phasentrennung und der Entfernung des Lösungsmittels und gegebenenfalls verwendeten Katalysators, durch Extraktion oder Strippung mit Wasserdampf und, nach der pH-Einstellung, durch eine Aktivkohlebehandlung.

Hiernach kann das alkalichloridhaltige Abwasser direkt der osmotischen Destillation e) zugeführt werden.

Gegenüber dem Stand der Technik (WO 03/70639 A), in dem max. 13 % des im Abwasser der Polycarbonat-Produktion vorhandenen Natriumchlorids bei der NaCl-Elektrolyse eingesetzt werden kann, können durch das erfindungsgemäße Verfahren mehr als 13 % des Natriumchlorids aus dem Abwasser zurück gewonnen werden..

Das neue Verfahren kann auch mit einer Alkalichlorid-Elektrolyse durchgeführt werden, bei der kein Wasserstoff an der Kathode erzeugt wird, sondern die Kathode durch eine Gasdiffusionselektrode ersetzt wird, an der Sauerstoff zu Hydroxid-Ionen reduziert wird.

Wenn z.B. in einem Verbundstandort kein Wasserstoff für chemische Reaktionen benötigt wird, kann auf das Zwangsanfallprodukt Wasserstoff verzichtet werden. Vorteil ist eine Energieeinsparung bei der Elektrolyse, die durch die niedrigere Elektrolysespannung bei Einsatz einer Gasdiffusionselektrode zurückzuführen ist.

Die aus der Polycarbonat-Produktion gelangende Natriumchlorid-haltige Lösung weist üblicherweise einen Natriumchlorid-Gehalt von bis zu 10 Gew.-% auf, soweit es sich um das Reaktionsabwasser handelt. Wird das Reaktionsabwasser mit dem Waschwasser vereinigt so beträgt die NaCl-Konzentration beispielsweise ca. 6 Gew.-%. Liefert die Elektrolyse das Chlor und die Natronlauge ausschließlich für die Polycarbonat-Produktion, so kann das Natriumchlorid-haltige Abwasser nur zu einem geringen Teil in der Elektrolyse eingesetzt werden. So können bei den üblichen Ionenaustauschermembranen und den Standardbetriebsparametem der Natriumchlorid-Elektrolyse nur ca. 7 % des Natriumchlorids einer 6 Gew.-%igen Natriumchlorid-haltigen Polycarbonat-Abwasserlösung eingesetzt werden. Die Standardbetriebsparameter der NaCl-Elektrolyse sind eine Solekonzentration im Ablauf von 200 bis 240g/l und eine NaOH-Konzentration von 31-32 Gew.-%. Ein vollständiges Recycling des anfallenden Natriumchlorids ist daher bisher nicht möglich. Eine Aufkonzentrierung durch thermische Verdampfung des Wassers ist derzeit nicht wirtschaftlich, da das Natriumchlorid als sehr preiswertes Produkt zur Verfügung steht.

Mit dem erfindungsgemäßen Verfahren können deutlich mehr als 13 % des Natriumchlorids aus anfallenden Abwässern, bei einer Konzentration von 10 Gew.-% recycelt werden, sofern die Natriumchlorid-Elektrolyse ausschließlich das Chlor und die Natronlauge für die Polycarbonat-Produktion bereitstellt. Üblicherweise werden Natriumchlorid-Elektrolysen an chemischen Verbundstandorten mit mehreren Chlorverbrauchern betrieben, so dass nicht von allen Verbrauchern eine Natriumchlorid-haltige Lösung zum Recycling bereit steht. Der Anteil an wieder verwertbarem Natriumchlorid aus dem Abwasser steigt, wenn die Natriumchlorid-Elektrolyse die Natronlauge und das Chlor nicht ausschließlich für die Polycarbonat-Produktion bereitstellen muss.

Eine weitere bevorzugte Variante des neuen Verfahrens ist, dass das Abwasser der Polycarbonatherstellung durch festes Alkalichlorid aufkonzentriert und der Alkalichlorid-Elektrolyse zugeführt wird. Hierdurch könnten mehr als 50 % des Alkalichlorids aus dem Polycarbonat-Abwasser wieder verwendet werden.

Dies setzt jedoch voraus, dass das Chlor und die Alkalilauge nicht ausschließlich für die Polycarbonat-Produktion eingesetzt wird.

Besonders bevorzugt wird ein alkalichloridhaltiges Abwasser bei der Elektrolyse f) eingesetzt bzw. zugeführt dessen pH-Wert kleiner als 7 beträgt. Die pH-Wert Einstellung erfolgt vorzugsweise mit Salzsäure, kann aber auch mit gasförmigem Chlorwasserstoff erfolgen.

Gemäß einem weiteren bevorzugten Verfahren wird die NaCl-Elektrolyse so betrieben, dass die NaCl-Lösung, die aus der Zelle gelangt, eine NaCl-Konzentration von weniger als 200 g/l aufweist. Parallel hierzu kann die aus der Zelle ablaufende Laugenkonzentration weniger als 30 Gew.-% betragen.

Der Wassertransport über die Ionenaustauschermembran hängt nicht nur von den Betriebsparametern ab, sondern auch von dem eingesetzten Membran-Typ. Gemäß dem erfindungsgemäßen Verfahren werden bevorzugt solche Ionenaustauschermembranen eingesetzt, die unter den erfindungsgemäßen Bedingungen der Natriumchlorid- und Laugekonzentration einen Wassertransport durch die Membran von mehr als 4,5 mol Wasser je mol Natrium ermöglichen.

Die Stromdichte wird dabei auf die Membranfläche berechnet und beträgt insbesondere 2 bis 6 kA/m². Besonders bevorzugt werden Anoden mit größere Oberfläche eingesetzt. Unter Anoden mit größerer Oberfläche sind solche zu verstehen, bei denen die physikalische Oberfläche deutlich höher ist als die projekzierte Oberfläche. Anoden mit größerer Oberfläche sind z.B. schaum- oder filzartig aufgebaute Elektroden. Hierdurch wird anodische eine sehr große Elektrodenoberfläche angeboten und die lokale Stromdichte stark erniedrigt. Die Oberfläche der Anode ist bevorzugt so zu wählen, das die lokale Stromdichte bezogen auf die physikalische Oberfläche der Elektrode kleiner als 3 kA/m² beträgt. Je größer die Oberfläche und je niedriger die lokale Stromdichte, desto gering kann die Natriumchlorid-Konzentration in der Sole gewählt werden und desto höher ist der Anteil an Natriumchlorid aus dem Abwasser, der recycelt werden kann.

Der pH-Wert des alkalichloridhaltigen Abwassers sollte vor der Elektrolyse f) bevorzugt kleiner als 7 betragen, besonders bevorzugt von 0,5 bis 6.

Die Alkalichlorid-Elektrolyse sollte so betrieben werden, dass die Alkalichloridkonzentration der aus der Zelle gelangenden Alkalichloridlösung zwischen 100 bis 280 g/l Natriumchlorid und/oder dass die Konzentration der Alkalilauge, die aus der Zelle gelangt 13 bis 33 Gew.-% beträgt.

Besonders bevorzugt sind Konzentrationen, die den Betrieb der Zelle bei niedrigeren Spannungen ermöglichen. Hierzu sollte die Konzentration der aus der Zelle gelangenden Alkalichloridlösung vorzugsweise zwischen 110 bis 220 g/l Alkalichlorid und/oder die Konzentration der Alkalilauge, die aus der Zelle gelangt 20 bis 30 Gew.-% betragen.

Die eingesetzten Ionenaustauschermembranen bei der Elektrolyse sollten bevorzugt einen Wassertransport je mol Natrium von mehr als 4,0 mol H₂O/mol Natrium aufweisen, besonders bevorzugt 4,5 bis 6,5 mol H₂O/mol Natrium.

Das Verfahren wird bevorzugt so betrieben, dass die Elektrolyse f) bei einer Temperatur von 70 bis 100°C, vorzugsweise bei 80 bis 95°C betrieben wird.

Die Elektrolyse wird bei einem Absolutdruck von 1 bis 1,4 bar, bevorzugt bei einem Druck von 1,1 bis 1,2 bar betrieben.

Die Druckverhältnisse zwischen Anoden- und Kathodenraum werden insbesondere so gewählt, dass der Druck im Kathodenraum höher ist als der Druck im Anodenraum.

Der Differenzdruck zwischen Kathoden- und Anodenraum sollte in einem besonders bevorzugten Verfahren 20 bis 150 mbar, vorzugsweise 30 bis 100 mbar betragen.

Bei niedrigeren Alkalichloridkonzentrationen können auch spezielle Anodencoatings eingesetzt werden. Insbesondere kann das Coating der Anode neben Rutheniumoxid auch weitere Edelmetallkomponenten der 7. und 8. Nebengruppe des Periodensystems der Elemente enthalten. Beispielsweise kann das Anodencoating mit Palladiumverbindungen dotiert werden. Ebenso sind Coatings auf Basis von Diamanten einsetzbar.

Die nachfolgenden Beispiele sollen die vorliegende Erfindung illustrieren ohne sie jedoch einzuschränken.

### Beispiele

Die Beispiele sollen das erfindungsgemäße Verfahren anhand der Aufkonzentrierung der bei der Herstellung von Polycarbonat anfallenden Natriumchlorid-haltigen Abwasserphasen und gleichzeitige Verdünnung der aus der Elektrolyse erhaltenen Natronlauge für das Polycarbonat-Herstellungsverfahren durch osmotische Membrandestillation und Elektrolyse der erhaltenen Natriumchlorid-haltigen Lösungen darstellen.

### Beispiel 1

### a) Herstellung und Aufarbeitung des Polycarbonats

In einem Umpumpreaktor werden vor der Pumpe über ein T-Stück 24.000 kg/h einer alkalischen Bisphenol A-Lösung, die 15 Gew.-% BPA und 2,1 mol Natronlauge pro mol BPA enthält, sowie über ein weiteres T-Stück 1848 kg/h Phosgen, gelöst in 20400 kg/h Lösungsmittel, welches aus 50 Gew.-% Methylenchlorid und 50 Gew.-% Monochlorbenzol besteht, eindosiert.

Zur Aufrechterhaltung der Alkalität werden 360 kg/h 32 Gew.-%-ige Natronlauge zudosiert und das Reaktionsgemisch über einen Wärmetauscher und einen ungerührten Verweilzeitbehälter zurück zur Pumpe geleitet, wobei die o.g. Stoffströme zudosiert werden.

Mittels einer Mengenmessung wird die umgepumpte Menge zu 260 m³/h bestimmt.

Die Temperatur beträgt 36°C.

Eine Teilmenge der Emulsion, die so groß ist wie die zufließenden Rohstoffe, wird vor den Dosierstellen für BPA und Phosgen aus dem Verweilzeitbehälter einer weiteren Pumpe zugeleitet und durch einen Rohrreaktor gepumpt. Diesem Strom werden 1050 kg/h Natronlauge (32 Gew.-%) sowie 134 kg/h p-tert.-Butylphenol, gelöst in 536 kg Lösungsmittelgemisch, zudosiert. Nach einer Verweilzeit von 10 Min. werden 18 kg/h N-Ethylpiperidin in Form einer 4,8 Gew.-%igen Lösung in Lösungsmittelgemisch (50 Teile Methylenchlorid und 50 Teile Monochlorbenzol) zudosiert und die Emulsion mittels einer weiteren Pumpe durch einen weiteren Rohrreaktor gepumpt.

Nach einer Verweilzeit von weiteren 10 Min. wird die Emulsion in einem Trenngefäß getrennt und die Polycarbonatlösung nach bekannten Verfahren z.B. durch Zentrifugentechnik, elektrolytfrei gewaschen.

Die Polycarbonatlösung wird in Eindampfanlagen einkonzentriert und auf einem Ausdampfextruder von Restlösungsmittel befreit.

Am Polycarbonatgranulat werden folgende analytische Daten bestimmt:
YI = 1,35 (gemessen nach ASTM E 313)
Eta rel = 1,195 (gemessen nach ISO 1628/4)
Phenol. OH = 85 ppm (gemessen durch UV-Spektroskopie bei 546 nm nach Farbreaktion der Phenol. Endgruppen mit TiCl₄)

Das Reaktionsabwasser wird hier nicht mit den Waschphasen vereinigt und wird durch Strippen mit Wasserdampf von Lösungsmittelresten und Katalysator befreit. Nach Neutralisierung mit Salzsäure und Behandlung mit Aktivkohle enthält das Reaktionsabwasser 9,0 Gew.-% NaCl und < 2 ppm freies BPA und Phenolen, gemessen durch UV-Spektroskopie der wässrigen Phase bei 294 nm, z.B. in einem Spektrometer der Fa. Perkin-Elmer.

Es kann ohne weitere Reinigung der osmotische Membrandestillation zugeführt werden.

### b) Aufkonzentrierung der Natriumchlorid-Lösung (Reaktionsabwasser) durch osmotische Membrandestillation

Die osmotische Destillation wurde in einem Modul, welche eine Membranfläche von 1 m² aufwies, bei Raumtemperatur durchgeführt. Eingesetzt wurde eine Membran des Typs Accurel PP 150/330 der Firma Membrana. 2,3 L der 9,0 Gew.-% Natriumchlorid-haltigen Reaktionsabwasserlösung aus a) wurde in das Modul gepumpt, während 1L 31,0 Gew.-%-ige Natronlauge als Wasseraufnehmende Phase in Gleichstrom eindosiert wurden. Die Konzentration der nach 210 Minuten aus der Zelle austretende Reaktionsabwasserlösung betrug 18,0 Gew.-% NaCl, während die entnommene NaOH-Lösung auf 16,0 Gew.-% abgereichert war.

Die aus der Zelle austretende aufkonzentrierte Reaktionsabwasserlösung kann ohne weitere Reinigung der Elektrolyse zugeführt werden.

### c) Elektrochemische Oxidation der Natriumchlorid-Lösung aus der osmotischen Destillation

Die Elektrolyse wird beispielhaft in einer Laborelektrolysezelle mit einer Anodenfläche von 0,01m² durchgeführt. Die Stromdichte betrugt 4 kA/m², Temperatur Auslauf Kathodenseite 88°C, Temperatur Auslauf Anodenseite 89°C. Eingesetzt wurde eine Elektrolysezelle mit Standard Anoden- und Kathodencoating der Fa. DENORA, Deutschland. Eingesetzt wurde eine Ionenaustauschermembran der Fa. DuPont Nafion 982 WX. Die Elektrolysespannung betrug 3,02 V. Durch die Anodenkammer wurde eine Natriumchlorid-haltige Lösung mit einem Massenstrom von 1,0 kg/h umgepumpt. Die Konzentration der der Anodenkammer zugeführten Lösung betrug 25 Gew.-% NaCl. Aus der Anodenkammer konnte eine 20 Gew.%-ige NaCl-Lösung entnommen werden. Der aus der Anodenkammer entnommenen NaCl-Lösung wurden 0,137 kg/h an 18,0 Gew.%-igen aufkonzentriertes Reaktionsabwasser aus der Polycarbonatherstellung und 0,0641 kg/h festes Natriumchlorid zugegeben. Die Lösung wurde anschließend wieder in die Anodenkammer eingespeist. Der Wassertransport über die Membran betrug 3,5 mol Wasser je mol Natrium. 1 % der aus der Zelle gelangenden NaCl-Lösung wurde verworfen, entsprechend 0,008 kg/h einer 20,2 Gew.-% NaCl-haltigen Lösung.

Auf der Kathodenseite wurde eine Natronlauge mit einem Massenstrom von 1,107 kg/h umgepumpt. Die Konzentration der in die Kathodenseite eingespeisten Natronlauge betrug 30 Gew.-% NaOH, die aus der Kathodenseite entnommene Natronlauge hatte eine Konzentration von 31,9 Gew.-% NaOH. 0,187 kg/h der 31,9 Gew.-%-igen Lauge wurden dem Volumenstrom ent-nommen, der Rest wurde mit 0,0664 kg/h Wasser aufgestockt und wieder in das Kathoden-element zurückgeführt. 27,8 % des umgesetzten Natriumchlorids stammen aus dem Polycarbonat-Reaktionsabwasser.

### d) Rückführung der verdünnten Natriumhydroxid-Lösung aus der osmotischen Destillation in die Polycarbonat-Herstellung

Die verdünnte Natriumhydroxid-Lösung aus b) wird der Polycarbonatherstellung zugeführt. Ein Gemisch aus 6,5 Gew.-%-iger Natronlauge, hergestellt durch Verdünnung der 16,0 Gew.-%-igen Natronlauge aus b) mit vollentsalztem Wasser (VE-Wasser), und Bisphenol wird mit einem Lösungsmittelgemisch aus Methylenchlorid/Chlorbenzol und Phosgen zusammengebracht und verfahren wie in 1a) beschrieben.

Durch die Verwendung der 16,0 Gew.-%-igen statt der üblichen 32 Gew.-%-igen Natriumhydroxid-Lösung kann 25,5 % vollentsalztes Wasser (VE-Wasser) eingespart werden.

### Beispiel 2

### a) Herstellung und Aufarbeitung des Polycarbonats

Es wird verfahren wie in Beispiel 1a) beschrieben, nur wird das Reaktionsabwasser mit den Waschphasen zu Gesamtprozessabwasser vereinigt und durch Strippen mit Wasserdampf von Lösungsmittelresten und Katalysator befreit. Nach Neutralisierung mit Salzsäure und Behandlung mit Aktivkohle enthält das Gesamtprozessabwasser 6,2 Gew.-% NaCl und < 2 ppm freies BPA und Phenolen, gemessen durch UV-Spektroskopie der wässrigen Phase bei 294 nm, z.B. in einem Spektrometer der Fa. Perkin-Elmer. Es kann ohne weitere Reinigung der osmotischen Membrandestillation zugeführt werden.

### b) Aufkonzentrierung der Natriumchlorid-Lösung (Gesamtprozessabwasser) durch osmotische Membrandestillation

Die osmotische Destillation wurde beispielhaft in einem Modul, welche eine Membranfläche von 1 m² aufwies, bei Raumtemperatur durchgeführt. Eingesetzt wurde eine Membran des Typs Accurel PP 150/330 der Firma Membrana. Das 6,2 Gew.-% Natriumchlorid-haltigen Gesamtprozessabwasser aus a) wurde mit einem Massenstrom von 19,5 L/h in das Modul gepumpt, während 13,0 L/h 33 Gew.-%-ige Natronlauge als Wasseraufnehmende Phase in Gleichstrom eindosiert wurden. Durch die starke Volumenabnahme der NaCl-Lösung wird nach 20 Minuten einmal 1 L nachgefüllt. Die Konzentration der nach 75 Minuten aus der Zelle austretende Prozessabwasserlösung betrug 15,2 Gew.-% NaCl, während die entnommene NaOH-Lösung auf 16,6 Gew.-% abgereichert war.

Die aus der Zelle austretende aufkonzentrierte Gesamtprozessabwasserlösung kann ohne weitere Reinigung der Elektrolyse zugeführt werden.

### c) Elektrochemische Oxidation der Natriumchlorid-Lösung aus der osmotischen Destillation

Die Elektrolyse wird beispielhaft in einer Laborelektrolysezelle mit einer Anodenfläche von 0,01m² durchgeführt. Die Stromdichte betrugt 4 kA/m², Temperatur Auslauf Kathodenseite 88°C, Temperatur Auslauf Anodenseite 89°C. Eingesetzt wurde eine Elektrolysezelle mit Standard Anoden- und Kathodencoating der Fa. DENORA, Deutschland. Eingesetzt wurde eine Ionenaustauschermembran der Fa. DuPont Nafion 982 WX. Die Elektrolysespannung betrug 3,02 V. Durch die Anodenkammer wurde eine Natriumchlorid-haltige Lösung mit einem Massenstrom von 1,0 kg/h umgepumpt. Die Konzentration der der Anodenkammer zugeführten Lösung betrug 25 Gew.-% NaCl. Aus der Anodenkammer konnte eine 20 Gew.-%ige NaCl-Lösung entnommen werden. Der aus der Anodenkammer entnommenen NaCl-Lösung wurden 0,132 kg/h an 15,2 Gew.-%igen angereicherten Gesamtprozessabwasser aus der osmotische Membrandestillation unter b) und 0,0686 kg/h festes Natriumchlorid zugegeben. Die Lösung wurde anschließend wieder in die Anodenkammer eingespeist. Der Wassertransport über die Membran betrug 3,5 mol Wasser je mol Natrium. 1 % der aus der Zelle gelangenden NaCl-Lösung wurde verworfen, entsprechend 0,008 kg/h einer 20,2 Gew.-% NaCl-haltigen Lösung.

Auf der Kathodenseite wurde eine Natronlauge mit einem Massenstrom von 1,107 kg/h umgepumpt. Die Konzentration der in die Kathodenseite eingespeisten Natronlauge betrug 30 Gew.% NaOH, die aus der Kathodenseite entnommene Natronlauge hatte eine Konzentration von 31,9 Gew.-% NaOH 0,187 kg/h der 31,9 Gew.-%-igen Lauge wurden dem Volumenstrom entnommen, der Rest wurde mit 0,0664 kg/h Wasser aufgestockt und wieder in das Kathodenelement zurückgeführt.

22,7 % des umgesetzten Natriumchlorids stammen aus dem Polycarbonat-Gesamtprozessabwasser.

### d) Rückführung der verdünnten Natriumhydroxid-Lösung aus der osmotischen Destillation in die Polycarbonat-Herstellung

Die verdünnte Natriumhydroxid-Lösung aus b) wird der Polycarbonatherstellung zugeführt. Ein Gemisch aus 6,5Gew.-%-iger Natronlauge, hergestellt durch Verdünnung der 16,6 Gew.-%-igen Natronlauge aus b) mit vollentsalztem Wasser (VE-Wasser), und Bisphenol wird mit einem Lösungsmittelgemisch aus Methylenchlorid/Chlorbenzol und Phosgen zusammengebracht und verfahren wie in 1a) beschrieben.

Durch die Verwendung der 16,6 Gew.-%-igen statt der üblichen 32 Gew.-%-igen Natriumhydroxid-Lösung kann 23,7 % vollentsalztes Wasser (VE-Wasser) eingespart werden.

### Beispiel 3

### a) Herstellung und Aufarbeitung des Polycarbonats

Ein Reaktionsabwasser aus der Polycarbonatherstellung, erhalten wie in Beispiel 1a) beschrieben, wird hier nicht mit den Waschphasen vereinigt und wird durch Strippen mit Wasserdampf von Lösungsmittelresten und Katalysator befreit. Nach Neutralisierung mit Salzsäure und Behandlung mit Aktivkohle enthält das Reaktionsabwasser 10 Gew.-% NaCl und < 2 ppm freies BPA und Phenolen, gemessen durch UV-Spektroskopie der wässrigen Phase bei 294 nm, z.B. in einem Spektrometer der Fa. Perkin-Elmer. Es kann ohne weitere Reinigung der osmotischen Membrandestillation zugeführt werden.

### b) Aufkonzentrierung der Natriumchlorid-Lösung (Reaktionsabwasser) durch osmotische Membrandestillation

Das Reaktionsabwasser aus a) wird nach dem in 1b) beschriebenen Verfahren durch osmotische Membrandestillation auf 18,0 Gew.-% aufkonzentriert und der Elektrolyse mit Gasdiffu-sionselektrode zugeführt.

### c) Elektrochemische Oxidation der Natriumchlorid-Lösung aus der osmotischen Destillation mit Gasdiffusionselektrode

Das aufkonzentrierte Abwasser entsprach der Qualität gemäß Beispiel 1b). Da für die Herstellung von DPC kein Wasserstoff benötigt wird, kann auf die Bildung von Wasserstoff bei der Elektrolyse verzichtet werden. Die Elektrolyse wurde daher mit Gasdiffusionselektroden betrieben. Die Stromdichte betrugt 4 kA/m², Temperatur Auslauf Kathodenseite 88°C, Temperatur Auslauf Anodenseite 89 °C. Eingesetzt wurde eine Elektrolysezelle mit Standard Anoden-Coating der Fa. DENORA, Deutschland. Eingesetzt wurde eine Ionenaustauschermembran der Fa.DuPont, Nafion 982 WX. Die Elektrolysespannung betrug 2,11 V. In die Anodenkammer wurden 0,8 kg/h einer 25 Gew.-%-igen NaCl-haltigen Lösung dosiert. Die Natriumchlorid-Konzentration der der Anodenkammer entnommenen Lösung betrug 19,8 Gew.-% an NaCl. Der aus der Anodenkammer entnommenen NaCl-Lösung wurden 0,180 kg/h an 18,0 Gew.%-igem Reaktionsabwasser und 0,0557 kg/h festes Natriumchlorid zugegeben. Die Lösung wurde anschließend wieder in die Anodenkammer eingespeist. Der Wassertransport über die Membran betrug 4,9 mol Wasser je mol Natrium.

Auf der Kathodenseite wurde eine Natronlauge mit einem Massenstrom von 1,107 kg/h umgepumpt. Die Konzentration der in die Kathodenseite eingespeisten Natronlauge betrug 30,0 Gew.-% NaOH, die aus der Kathodenseite entnommen Natronlauge hatte eine Konzentration von 31,0 Gew.-% NaOH. 0,192 kg/h der 31,0 Gew.-%-igen Lauge wurden dem Volumen-strom entnommen, der Rest wurde mit 0,0345 kg/h Wasser aufgestockt und wieder in das Kathodenelement zurückgeführt. Der Anteil an umgesetztem Natriumchlorid aus dem Polycarbonat-Reaktionsabwasser betrug 36,9 %.

### Vergleichsbeispiel 4

### a) Herstellung und Aufarbeitung des Polycarbonats

Ein Reaktionsabwasser aus der Polycarbonatherstellung, erhalten wie in Beispiel 3a) beschrieben, wird nicht mit den Waschphasen vereinigt und durch Strippen mit Wasserdampf von Lösungsmittelresten und Katalysator befreit. Nach Neutralisierung mit Salzsäure und Behandlung mit Aktivkohle enthält das Reaktionsabwasser 10,0 Gew.-% NaCl und < 2 ppm freies BPA und Phenolen, gemessen durch UV-Spektroskopie der wässrigen Phase bei 294 nm, z.B. in einem Spektrometer der Fa. Perkin-Elmer. Es wird ohne Aufkonzentrierung direkt in die Elektrolyse eingesetzt.

### b) Elektrochemische Oxidation der Natriumchlorid-Lösung (Reaktionsabwasser)

Die Elektrolyse wurde beispielhaft in einer Laborelektrolysezelle mit einer Anodenfläche von 0,01m² durchgeführt. Die Stromdichte betrug 4 kA/m², Temperatur Auslauf Kathodenseite 88°C, Temperatur Auslauf Anodenseite 89°C. Eingesetzt wurde eine Elektrolysezelle mit Standard Anoden- und Kathodencoating der Fa. DENORA, Deutschland. Eingesetzt wurde eine Ionenaustauschermembran der Fa. DuPont Nafion® 982 20 WX. Die Elektrolysespannung betrug 3,02 V. Durch die Anodenkammer wurde eine Natriumchlorid-haltige Lösung mit einem Massenstrom von 1,0 kg/h umgepumpt. Die Konzentration der der Anodenkammer zugeführten Lösung betrug 25 Gew.% NaCl. Aus der Anodenkammer konnte eine 20 Gew.%-ige NaCl-Lösung entnommen werden. Der aus der Anodenkammer entnommenen NaCl-Lösung wurden 0,125 kg/h an 10,0 Gew.%-igen Reaktionsabwasser aus der Polycarbonatherstellung und 0,076 kg/h festes Natriumchlorid zugegeben. Die Lösung wurde anschließend wieder in die Anodenkammer eingespeist. Der Wassertransport über die Membran betrug 3,5 mol Wasser je mol Natrium. 1% der aus der Zelle gelangenden NaCl-Lösung wurde verworfen, entsprechend 0,008 kg/h einer 20,0 Gew.%-igen NaCl-haltigen Lösung.

Auf der Kathodenseite wurde eine Natronlauge mit einem Massenstrom von 1,107 kg/h umgepumpt. Die Konzentration der in die Kathodenseite eingespeisten Natronlauge betrug 30,0 Gew.-% NaOH, die aus der Kathodenseite entnommene Natronlauge hatte eine Konzentration von 31,9 Gew.% NaOH. 0,188 kg/h der 31,9 Gew.%-igen Lauge wurden dem Volumenstrom entnommen, der Rest wurde mit 0,0664 kg/h Wasser aufgestockt und wieder in das Kathodenelement zurückgeführt.

Lediglich 14,0 % des umgesetzten Natriumchlorids stammen aus dem Polycarbonat-Reaktionsabwasser.

### Vergleichsbeispiel 5

### a) Herstellung und Aufarbeitung des Polycarbonats

Es wurde das Reaktionsabwasser aus Vergleichsbeispiel 4 eingesetzt.

### b) Elektrochemische Oxidation der Natriumchlorid-Lösung (Reaktionsabwasser) mit Gasdiffusionselektrode

Da für die Herstellung von Polycarbonat kein Wasserstoff benötigt wird, kann auf die Bildung von Wasserstoff bei der Elektrolyse verzichtet werden. Die Elektrolyse wurde daher mit Gasdiffusionselektroden betrieben. Die Stromdichte betrugt 4 kA/m², Temperatur Auslauf Kathodenseite 88°C, Temperatur Auslauf Anodenseite 89 °C. Eingesetzt wurde eine Elektrolysezelle mit Standard Anoden-Coating der Fa. DENORA, Deutschland. Eingesetzt wurde eine Ionenaustauschermembran der Fa.DuPont, Nafion 982 WX. Die Elektrolysespannung betrug 2,11 V. Es wurden 0,65 kg/h einer 25,0 Gew.%-igen NaCl-Lösung in die Anodenkammer eingespeist, die der Anodenkammer entnommenen Lösung enthielt 18 Gew.% an NaCl. Der aus der Anodenkammer entnommenen NaCl-Lösung wurden 0,163 kg/h an 10,0 Gew.%-igem Reaktionsabwasser und 0,0715 kg/h festes Natriumchlorid zugegeben. Die Lösung wurde anschließend wieder in die Anodenkammer eingespeist. Der Wassertransport über die Membran betrug 4,9 mol Wasser je mol Natrium.

Auf der Kathodenseite wurde eine Natronlauge mit einem Massenstrom von 1,107 kg/h umgepumpt. Die Konzentration der in die Kathodenseite eingespeisten Natronlauge betrug 30,0 Gew.-% NaOH, die aus der Kathodenseite entnommen Natronlauge hatte eine Konzentration von 31,0 Gew.% NaOH. 0,192 kg/h der 31,0 Gew.-%-igen Lauge wurden dem Volumen-strom entnommen, der Rest wurde mit 0,0345 kg/h Wasser aufgestockt und wieder in das Kathodenelement zurückgeführt.

Der Anteil an umgesetztem Natriumchlorid aus dem Polycarbonat-Reaktionsabwasser betrug 18,6 %.

Die Beispiele zeigen dass eine wesentlich höhere Recyclierungsquote des Natriumchlorids in den Abwasserlösungen des Polycarbonat-Herstellungsprozess bei der Elektrolyse erreicht werden kann nach Aufkonzentrierung durch osmotische Membrandestillation, wobei das von der Alkalilauge aufgenommene Wasser bei der Herstellung der Alkalilaugelösung im Polycarbonat-Herstellungsschritt eingespart werden kann.

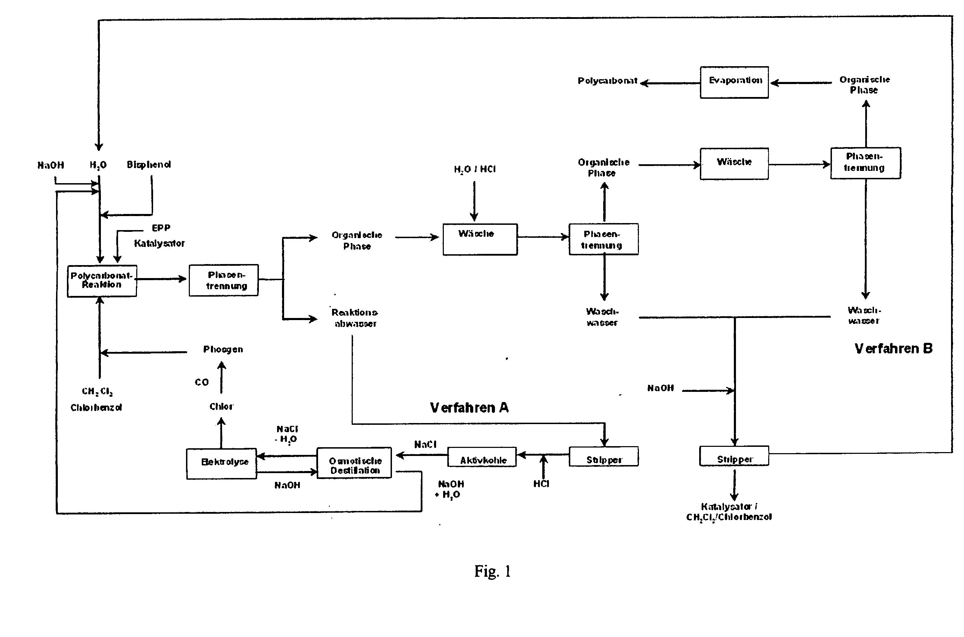

## Patentansprüche

1. Verfahren zur Herstellung von Polycarbonat umfassend wenigstens folgende Schritte:
a) Herstellung von Phosgen durch Umsetzung von Chlor mit Kohlenmonoxid,
b) Umsetzung des gemäß Schritt a) gebildeten Phosgens mit wenigstens einem Bisphenol in Gegenwart einer wässrigen Alkali-haltigen Base zu einem Polycarbonat und einer alkalichloridhaltigen Reaktionsabwasserlösung
c) Abtrennung und Aufarbeitung des in Schritt b) gebildeten Polycarbonats,
d) Abtrennung der Lösungsmittelreste und gegebenenfalls Katalysatorreste (d1) von der gemäß Schritt c) verbliebenen alkalichloridhaltigen Lösung,
e) Osmotische Membrandestillation wenigstens eines Teils der gemäß Schritt d) verbliebenen alkalichloridhaltigen Lösung,
f) Elektrochemische Oxidation wenigstens eines Teils der alkalichloridhaltigen Lösung aus e) unter Bildung von Chlor, Alkalilauge und gegebenenfalls Wasserstoff,
**dadurch gekennzeichnet, dass** die alkalichloridhaltige Lösung aus d) vor der Elektrolyse f) mittels osmotische Destillation im Schritt e) mit Alkalilauge als Wasserakzeptor aufkonzentriert wird.

2. Verfahren gemäß Anspruch 1, **dadurch gekennzeichnet, dass** in einem Schritt d) die Abtrennung der Lösungsmittelreste und gegebenenfalls Katalysatorreste (d1) durch Extraktion oder Strippen der Lösung mit Wasserdampf und/oder anschließende Behandlung mit Adsorbentien (d2), insbesondere mit Aktivkohle erfolgt und anschließend der osmotischen Membrandestillation im Schritt e) zugeführt wird.

3. Verfahren gemäß Anspruch 1 oder 2, **dadurch gekennzeichnet, dass** die osmotische Membrandestillation e) bei einer Temperatur von 10 bis 100°C, bevorzugt 20 bis 50°C betrieben wird.

4. Verfahren gemäß Anspruch 1 oder 2, **dadurch gekennzeichnet, dass** die osmotische Membrandestillation e) bei einem Absolutdruck von 1,0 bis 1,4 bar, bevorzugt 1,1 bis 1,2 bar, betrieben wird.

5. Verfahren gemäß Anspruch 1 oder 2, **dadurch gekennzeichnet, dass** die osmotische Membrandestillation e) mit einem Differenzdruck zwischen 20 bis 150 bar, bevorzugt zwischen 30 bis 100 bar, betrieben wird.

6. Verfahren gemäß einem der voranstehenden Ansprüche, **dadurch gekennzeichnet, dass** die osmotische Membrandestillation wenigstens eines Teiles der alkalichloridhaltigen Lösung aus d) mit Membran Accurel PP erfolgt.

7. Verfahren gemäß einem der voranstehenden Ansprüche, **dadurch gekennzeichnet, dass** wenigstens ein Teil der gereinigten alkalichloridhaltigen Lösung aus e) in den Sole-kreislauf einer Membranelektrolyse zur Herstellung von Chlor, Natronlauge und ggf. Wasserstoff gegeben wird.

8. Verfahren gemäß einem der voranstehenden Ansprüche, **dadurch gekennzeichnet, dass** der alkalichloridhaltigen Lösung bei der Elektrolyse f) zusätzliches Alkalichlorid zur Erhöhung der Alkalichloridkonzentration zugegeben wird.

9. Verfahren gemäß einem der voranstehenden Ansprüche, **dadurch gekennzeichnet, dass** der alkalichloridhaltigen Lösung nach der Abtrennung in Schritt c) bei der Reinigung im Teilschritt d1) vor Behandlung mit Absorbentien (d2) auf einen pH-Wert von kleiner als 8 eingestellt wird.

10. Verfahren gemäß einem der voranstehenden Ansprüche, **dadurch gekennzeichnet, dass** Bisphenole der allgemeinen Formel
HO-Z-OH,
in denen Z ein aromatischer Rest mit 6 bis 45 C-Atomen ist, der einen oder mehrere aromatische Kerne enthalten kann, substituiert sein kann und aliphatische Reste oder cycloaliphatische Reste oder Heteroatome als Brückenglieder enthalten kann, eingesetzt werden.

11. Verfahren nach einem der voranstehenden Ansprüche, **dadurch gekennzeichnet, dass** als Bisphenole Hydrochinon, Resorcin, Dihydroxydiphenyle, Bis-(hydroxyphenyl)-alkane, Bis(hydroxy-phenyl)-cycloalkane, Bis-(hydroxyphenyl)-sulfide, Bis-(hydroxyphenyl)-ether, Bis-(hydroxyphenyl)-ketone, Bis-(hydroxyphenyl)-sulfone, Bis-(hydroxyphenyl)-sulfoxide, α,α'-Bis-(hydroxyphenyl)-diisopropylbenzole, Bis-(hydroxyphenyl)-phtalimidine oder deren alkylierte, kernalkylierte und kernhalogenierte Verbindungen eingesetzt werden.

12. Verfahren gemäß wenigstens einem der voranstehenden Ansprüche, **dadurch gekennzeichnet, dass** als Diphenol(e) 4,4'-Dihydroxydiphenyl, 2,2-Bis-(4-hydroxyphenyl)-1-phenylpropan, 1,1-Bis-(4-hydroxyphenyl)-phenylethan, 2,2-Bis-(4-hydroxyphenyl)-propan (Bisphenol A, BPA), 2,4-Bis-(4-hydroxyphenyl)-2-methylbutan, 1,3-Bis-[2-(4-hydroxyphenyl)-2-propyl]benzol (Bisphenol M), 2,2-Bis-(3-methyl-4-hydroxyphenyl)-propan, Bis-(3,5-dimethyl-4-hydroxyphenyl)-methan, 2,2-Bis-(3,5-dimethyl-4-hydroxy-phenyl)-propan, Bis-(3,5-dimethyl-4-hydroxyphenyl)-sulfon, 2,4-Bis-(3,5-dimethyl-4-hydroxyphenyl)-2-methylbutan, 1,3-Bis-[2-(3,5-dimethyl-4-hydroxyphenyl)-2-propyl]-benzol, 2-Hydrocarbyl-3,3-bis(4-hydroxyphenyl)-phthalimidin, 3,3-Bis(4-hydroxyphenyl)-1-phenyl-1H-indol-2-on, 2,2-Bis(4-hydroxyphenyl)-1-phenyl-1H-indol-2-on, 3,3-Bis(4-hydroxyphenyl)-1-methyl-1H-indol-2-on, 2,2-Bis(4-hydroxyphenyl)-1-methyl-1H-indol-2-on, 3,3-Bis(4-hydroxyphenyl)-N-methyl-phthalimidin, 3,3-Bis(4-hydroxyphenyl)-N-phenyl-phthalimidin und 1,1-Bis-(4-hydroxyphenyl)-3,3,5-trimethyl-cyclohexan (Bisphenol TMC) eingesetzt werden.

13. Verfahren nach einem der voranstehenden Ansprüche, **dadurch gekennzeichnet, dass** Schritt c) wenigstens die folgenden Schritte umfasst:
cc) Trennung von Polycarbonat enthaltender organischer Phase und wässriger alkalichloridhaltiger Reaktionsabwasserlösung
dd) wenigstens einmaliges Waschen der in Schritt aa) erhaltenen Polycarbonat enthaltenden organischen Phase,
wobei wenigstens eines Teils der Waschphase(n) aus c) bb) gegebenenfalls nach Trennung von Katalysatorresten und gegebenenfalls organischen Lösungsmittelresten als Teilersatz des Wassers zur Herstellung der Natronlauge für Schritt b) verwendet wird.

14. Verfahren gemäß Anspruch 1, **dadurch gekennzeichnet, dass** es sich bei dem Alkali um Natrium handelt.

## Claims

1. Process for producing polycarbonate comprising at least the following steps:
a) producing phosgene by reacting chlorine with carbon monoxide,
b) reacting the phosgene formed as per step a) with at least one bisphenol in the presence of an aqueous alkali-metal-containing base to form a polycarbonate and an alkali-metal-chloride-containing reaction waste water solution
c) separating off and working up the polycarbonate formed in step b),
d) separating off the solvent residues and optionally catalyst residues (d1) from the alkali-metal-chloride-containing solution remaining as per step c),
e) osmotic membrane distillation of at least some of the alkali-metal-chloride-containing solution remaining as per step d),
f) electrochemical oxidation of at least some of the alkali-metal-chloride-containing solution from e), forming chlorine, alkali metal hydroxide solution and, if appropriate, hydrogen,
**characterized in that** the alkali-metal-chloride-containing solution from d), before the electrolysis f), is concentrated by means of osmotic distillation in step e) using alkali metal hydroxide solution as water acceptor.

2. Process according to Claim 1, **characterized in that**, in a step d), the separation of the solvent residues and optionally catalyst residues (d1) takes place by extraction or stripping the solution with steam, and/or subsequent treatment with adsorbents (d2), in particular with activated carbon and subsequently is fed to the osmotic membrane distillation in step e).

3. Process according to Claim 1 or 2, **characterized in that** the osmotic membrane distillation e) is operated at a temperature of 10 to 100°C, preferably 20 to 50°C.

4. Process according to Claim 1 or 2, **characterized in that** the osmotic membrane distillation e) is operated at an absolute pressure of 1.0 to 1.4 bar, preferably 1.1 to 1.2 bar.

5. Process according to Claim 1 or 2, **characterized in that** the osmotic membrane distillation e) is operated at a differential pressure between 20 to 150 bar, preferably between 30 to 100 bar.

6. Process according to any one of the preceding claims, **characterized in that** the osmotic membrane distillation of at least some of the alkali-metal-chloride-containing solution from d) proceeds using an Accurel PP membrane.

7. Process according to any one of the preceding claims, **characterized in that** at least some of the purified alkali-metal-chloride-containing solution from e) is added to the brine circuit of a membrane electrolysis for producing chlorine, sodium hydroxide solution and, optionally, hydrogen.

8. Process according to any one of the preceding claims, **characterized in that** additional alkali metal chloride for increasing the alkali metal chloride concentration is added to the alkali-metal-chloride-containing solution in the electrolysis f).

9. Process according to any one of the preceding claims, **characterized in that**, in the purification in the substep d1), before treatment with adsorbents (d2), the alkali-metal-chloride-containing solution is set to a pH of below 8 after the separation in step c).

10. Process according to any one of the preceding claims, **characterized in that** bisphenols of the general formula
HO-Z-OH,
where Z is an aromatic moiety having 6 to 45 carbon atoms which can contain one or more aromatic rings, can be substituted and can contain aliphatic moieties or cycloaliphatic moieties or heteroatoms as bridging units can be used.

11. Process according to any one of the preceding claims, **characterized in that** the bisphenols used are hydroquinone, resorcinol, dihydroxybiphenyls, bis(hydroxyphenyl)alkanes, bis(hydroxyphenyl)cycloalkanes, bis(hydroxyphenyl) sulphides, bis(hydroxyphenyl) ethers, bis(hydroxyphenyl) ketones, bis(hydroxyphenyl) sulphones, bis(hydroxyphenyl) sulphoxides, α,α'-bis(hydroxyphenyl)diisopropylbenzenes, bis(hydroxyphenyl)phthalimidines or alkylated, ring-alkylated and ring-halogenated compounds thereof.

12. Process according to at least one of the preceding claims, **characterized in that** the diphenol(s) used are 4,4'-dihydroxydiphenyl, 2,2-bis(4-hydroxyphenyl)-1-phenylpropane, 1,1-bis(4-hydroxyphenyl)phenylethane, 2,2-bis(4-hydroxy-phenyl)propane (bisphenol A, BPA), 2,4-bis(4-hydroxyphenyl)-2-methylbutane, 1,3-bis[2-(4-hydroxyphenyl)-2-propyl]benzene (bisphenol M), 2,2-bis(3-methyl-4-hydroxyphenyl)propane, bis(3,5-dimethyl-4-hydroxyphenyl)methane, 2,2-bis(3,5-dimethyl-4-hydroxyphenyl)propane, bis(3,5-dimethyl-4-hydroxyphenyl) sulphone, 2,4-bis(3,5-dimethyl-4-hydroxyphenyl)-2-methylbutane, 1,3-bis[2-(3,5-dimethyl-4-hydroxyphenyl)-2-propyl]benzene, 2-hydrocarbyl-3,3-bis(4-hydroxyphenyl)phthalimidine, 3,3-bis(4-hydroxyphenyl)-1-phenyl-1H-indol-2-one, 2,2-bis(4-hydroxyphenyl)-1-phenyl-1H-indol-2-one, 3,3-bis(4-hydroxyphenyl)-1-methyl-1H-indol-2-one, 2,2-bis(4-hydroxyphenyl)-1-methyl-1H-indol-2-one, 3,3-bis(4-hydroxyphenyl)-N-methylphthalimidine, 3,3-bis(4-hydroxyphenyl)-N-phenyl-phthalimidine and 1,1-bis(4-hydroxyphenyl)-3,3,5-trimethylcyclohexane (bisphenol TMC).

13. Process according to any one of the preceding claims, **characterized in that** step c) comprises at least the following steps:
cc) separation of polycarbonate-containing organic phase and aqueous alkali-metal-chloride-containing reaction waste water solution
dd) at least once washing the polycarbonate-containing organic phase obtained in step cc),
wherein at least some of the wash phase (s) from c) dd), optionally after separation of catalyst residues, and if appropriate organic solvent residues, is used as partial substitute of the water for producing the sodium hydroxide solution for step b).

14. Process according to Claim 1, **characterized in that** the alkali metal is sodium.

## Revendications

1. Procédé pour la production de polycarbonate, comprenant au moins les étapes suivantes :
a) production de phosgène par mise en réaction de chlore avec du monoxyde de carbone,
b) mise en réaction du phosgène formé selon l'étape a) avec au moins un bisphénol en présence d'une base aqueuse contenant un alkali, pour l'obtention d'un polycarbonate et d'une solution d'eau résiduaire de réaction contenant un chlorure de métal alcalin,
c) séparation et traitement final du polycarbonate formé dans l'étape b),
d) séparation des restes de solvant et éventuellement de résidus de catalyseur (d1) d'avec la solution contenant un chlorure de métal alcalin, restant selon l'étape c),
e) distillation membranaire osmotique d'au moins une partie de la solution contenant un chlorure de métal alcalin, restant selon l'étape d),
f) oxydation électrochimique d'au moins une partie de la solution contenant un chlorure de métal alcalin, provenant de e), avec formation de chlore, d'une solution d'hydroxyde de métal alcalin et éventuellement d'hydrogène,
**caractérisé en ce qu'**avant l'électrolyse f) on concentre la solution contenant un chlorure de métal alcalin, provenant de d), par distillation osmotique dans l'étape e) avec une solution d'hydroxyde de métal alcalin en tant qu'accepteur d'eau.

2. Procédé selon la revendication 1, **caractérisé en ce que** dans une étape d) la séparation des restes de solvant et éventuellement de résidus de catalyseur (d1) s'effectue par extraction ou stripage de la solution avec de la vapeur d'eau et/ou traitement subséquent par des adsorbants (d2), en particulier par du charbon actif, et ensuite on l'envoie à la distillation membranaire osmotique dans l'étape e).

3. Procédé selon la revendication 1 ou 2, **caractérisé en ce qu'**on fait fonctionner la distillation membranaire osmotique e) à une température de 10 à 100 °C, de préférence de 20 à 50 °C.

4. Procédé selon la revendication 1 ou 2, **caractérisé en ce qu'**on fait fonctionner la distillation membranaire osmotique e) sous une pression absolue de 1,0 à 1,4 bar, de préférence 1,1 à 1,2 bar.

5. Procédé selon la revendication 1 ou 2, **caractérisé en ce qu'**on fait fonctionner la distillation membranaire osmotique e) avec une différence de pression comprise entre 20 et 150 bars, de préférence entre 30 et 100 bars.

6. Procédé selon l'une quelconque des revendications précédentes, **caractérisé en ce que** la distillation membranaire osmotique d'au moins une partie de la solution contenant un chlorure de métal alcalin, provenant de d), s'effectue avec une membrane Accurel PP.

7. Procédé selon l'une quelconque des revendications précédentes, **caractérisé en ce qu'**on introduit au moins une partie de la solution contenant un chlorure de métal alcalin, purifiée, provenant de e), dans le circuit d'eau salée d'une électrolyse sur membrane destinée à la production de chlore, d'une solution de soude et éventuellement d'hydrogène.

8. Procédé selon l'une quelconque des revendications précédentes, **caractérisé en ce que** dans l'électrolyse f) on ajoute du chlorure de métal alcalin supplémentaire à la solution contenant un chlorure de métal alcalin, afin d'augmenter la concentration de chlorure de métal alcalin.

9. Procédé selon l'une quelconque des revendications précédentes, **caractérisé en ce qu'**après la séparation dans l'étape c), lors de la purification dans l'étape partielle d1), avant le traitement par des adsorbants (d2), on ajuste à un pH inférieur à 8 la solution contenant un chlorure de métal alcalin.

10. Procédé selon l'une quelconque des revendications précédentes, **caractérisé en ce qu'**on utilise des bisphénols de formule générale
HO-Z-OH,
dans laquelle Z est un radical aromatique ayant de 6 à 45 atomes de carbone, qui contient un ou plusieurs noyaux aromatiques, peut être substitué et peut contenir des radicaux aliphatiques ou des radicaux cycloaliphatiques ou des hétéroatomes en tant que chaînons pontants.

11. Procédé selon l'une quelconque des revendications précédentes, **caractérisé en ce qu'**on utilise comme bisphénols l'hydroquinone, le résorcinol, des dihydroxydiphényles, des bis-(hydroxyphényl)-alcanes, des bis(hydroxy-phényl)-cycloalcanes, des bis-(hydroxyphényl)-sulfures, des bis-(hydroxyphényl)-éthers, des bis-(hydroxyphényl)-cétones, des bis-(hydroxyphényl)-sulfones, des bis-(hydroxyphényl)-sulfoxydes, des α,α'-bis-(hydroxyphényl)-diisopropylbenzènes, des bis-(hydroxyphényl)-phtalimidines ou leurs composés alkylés, alkylés sur le noyau et halogénés sur le noyau.

12. Procédé selon au moins l'une quelconque des revendications précédentes, **caractérisé en ce qu'**on utilise comme diphénol(s) le 4,4'-dihydroxydiphényle, le 2,2-bis-(4-hydroxyphényl)-1-phényl-propane, le 1,1-bis-(4-hydroxyphényl)-phényléthane, le 2,2-bis-(4-hydroxyphényl)-propane (bisphénol A, BPA), le 2,4-bis-(4-hydroxyphényl)-2-méthylbutane, le 1,3-bis-[2-(4-hydroxyphényl)-2-propyl]benzène (bisphénol M), le 2,2-bis-(3-méthyl-4-hydroxyphényl)propane, le bis-(3,5-diméthyl-4-hydroxyphényl)-méthane, le 2,2-bis-(3,5-diméthyl-4-hydroxyphényl)-propane, la bis-(3,5-diméthyl-4-hydroxyphényl)-sulfone, le 2,4-bis-(3,5-diméthyl-4-hydroxyphényl)-2-méthylbutane, le 1,3-bis-[2-(3,5-diméthyl-4-hydroxyphényl)-2-propyl]-benzène, une 2-hydrocarbyl-3,3-bis(4-hydroxyphényl)-phtalimidine, la 3,3-bis(4-hydroxyphényl)-1-phényl-1H-indol-2-one, la 2,2-bis(4-hydroxyphényl)-1-phényl-1H-indol-2-one, la 3,3-bis(4-hydroxyphényl)-1-méthyl-1H-indol-2-one, la 2,2-bis(4-hydroxyphényl)-1-méthyl-1H-indol-2-one, la 3,3-bis(4-hydroxyphényl)-N-méthyl-phtalimidine, la 3,3-bis(4-hydroxyphényl)-N-phényl-phtalimidine et le 1,1-bis-(4-hydroxyphényl)-3,3,5-triméthylcyclohexane (bisphénol TMC).

13. Procédé selon l'une quelconque des revendications précédentes, **caractérisé en ce que** l'étape c) comprend au moins les étapes suivantes :
cc) séparation de la phase organique contenant du polycarbonate et de la solution aqueuse d'eau résiduaire de la réaction, contenant un chlorure de métal alcalin
dd) lavage au moins une fois de la phase organique contenant du polycarbonate, obtenue dans l'étape cc),
au moins une partie de la/des phase(s) de lavage provenant de c) dd) étant éventuellement utilisée comme substitut partiel de l'eau dans la préparation de la solution de soude pour l'étape b), éventuellement après séparation des résidus de catalyseur et éventuellement de restes de solvants organiques.

14. Procédé selon la revendication 1, **caractérisé en ce que** pour ce qui est du métal alcalin il s'agit de sodium.
